# EUROPEAN PATENT APPLICATION

(11) **EP 3 296 656 A1**
(43) Date of publication of application: **21.03.2018**
(21) Application number: 16817727.7
(22) Date of filing: 15.06.2016
(51) Int. Cl.: F24F 11/02

(54) **AIR CONDITIONING SYSTEM, CONTROL METHOD, AND PROGRAM**

(30) Priority: 01.07.2015 JP 2015133048
(71) Applicant: Mitsubishi Heavy Industries Thermal Systems, Ltd., Tokyo 108-8215 (JP)
(72) Inventor: KATO, Takahiro, Tokyo 108-8215 (JP)
(74) Representative: Henkel, Breuer & Partner
(86) International application number: PCT/JP2016/067769
(87) International publication number: WO 2017/002618

(57) **Abstract**

An air conditioning system comprises: an air conditioning system main unit comprising a compressor to compress gas refrigerant, an indoor heat exchanger to radiate the heat of condensation by liquefying the compressed gas refrigerant, an outdoor heat exchanger to gasify the liquid refrigerant by absorbing the heat of evaporation, a pressure sensor to detect the intake pressure of refrigerant to the compressor, and an outdoor heat exchanger temperature sensor to detect the temperature of the outdoor heat exchanger; a saturation temperature calculation unit to calculate the intake pressure saturation temperature from the intake pressure; and an operation control unit to determine whether countermeasures for frost adhering to the outdoor heat exchanger are required on the basis of the intake pressure saturation temperature and the outdoor heat exchanger temperature.

## Description

### TECHNICAL FIELD

The present invention relates to an air conditioning system, a control method, and a program.

Priority is claimed on Japanese Patent Application No. 2015-133048, filed July 1, 2015, the content of which is incorporated herein by reference.

### BACKGROUND ART

Frost adheres to outdoor heat exchangers due to decreases in outside air temperatures during heating operations of air conditioning systems in some cases. In this case, defrosting operations are performed in air conditioning systems to melt adhering frost in some cases. Since air conditioning systems operate in cooling cycles in defrosting operations, heating operations are stopped.

With regard to a defrosting operation, Patent Document 1 discloses an air conditioner having a heating continuous operation priority mode of delaying the adherence of frost to an outdoor unit by operating the air conditioner while suppressing a heating capacity. The air conditioner detects a pipe temperature using an outdoor heat exchanger pipe temperature detection sensor attached to a refrigerant pipe of an outdoor heat exchanger. When the pipe temperature is a predetermined continuous operation liquid pipe temperature threshold value or more, the air conditioner performs a normal heating operation. On the other hand, when the pipe temperature is less than such a continuous operation liquid pipe temperature threshold value, the air conditioner lengthens a time taken to enter a defrosting operation by reducing the blowing temperature of an indoor unit. When the pipe temperature falls further and is less than a predetermined defrosting start temperature, the air conditioner performs a defrosting operation.

### Citation List

### Patent Literature

[Patent Literature 1] Japanese Unexamined Patent Application, First Publication No. 2013-234825

### SUMMARY OF INVENTION

### Technical Problem

When it is determined whether countermeasures for the adherence of frost to an outdoor heat exchanger using a temperature sensor installed in an outdoor heat exchanger are necessary, the determination accuracy concerning whether countermeasures for the adherence of frost are required is likely to decrease when a variation occurs in a temperature distribution at different places of the outdoor heat exchanger. For example, when frost adheres because there is a place with a temperature lower than that of a place in which a temperature sensor is installed, there is a possibility of erroneously determining that no countermeasures are required.

Also, the determination accuracy concerning whether countermeasures for the adherence of frost are required decreases even when the accuracy of temperature measurement decreases due to failure or the like of the temperature sensor.

The present invention provides an air conditioning system, a control method, and a program capable of improving the determination accuracy concerning whether countermeasures for the adherence of frost are required.

### Solution to Problem

According to a first aspect of the present invention, an air conditioning system includes: an air conditioning system main unit including a compressor configured to compress a gas refrigerant, an indoor heat exchanger configured to radiate condensation heat by liquefying the compressed gas refrigerant, an outdoor heat exchanger configured to gasify a liquid refrigerant by absorbing evaporation heat, a pressure sensor configured to detect an intake pressure of a refrigerant to the compressor, and an outdoor heat exchanger temperature sensor configured to detect a temperature of the outdoor heat exchanger; a saturation temperature calculation unit configured to calculate an intake pressure saturation temperature from the intake pressure; and an operation control unit configured to determine whether countermeasures for the adherence of frost to the outdoor heat exchanger are required on the basis of the intake pressure saturation temperature and the temperature of the outdoor heat exchanger.

The air conditioning system main unit may further include an outside air temperature sensor configured to detect an outside air temperature, the air conditioning system may further include: a saturation temperature threshold value determination unit configured to determine a threshold value of the intake pressure saturation temperature on the basis of the outside air temperature; and a heat exchanger temperature threshold value determination unit configured to determine a threshold value of an outdoor heat exchanger temperature on the basis of the outside air temperature, and the operation control unit may control the temperature of the outdoor heat exchanger to be equal to or higher than the threshold value of the outdoor heat exchanger temperature and control the intake pressure saturation temperature to be equal to or higher than the threshold value of the intake pressure saturation temperature.

The air conditioning system main unit may further include a hot gas bypass valve provided in a hot gas bypass configured to bypass a refrigerant compressed by the compressor to the outdoor heat exchanger, and the operation control unit may control the temperature of the outdoor heat exchanger to be equal to or higher than the threshold value of the outdoor heat exchanger temperature and control the intake pressure saturation temperature to be equal to or higher than the threshold value of the intake pressure saturation temperature by opening the hot gas bypass valve.

The air conditioning system main unit may further include an outdoor fan configured to blow outside air to the outdoor heat exchanger, and the operation control unit may control the temperature of the outdoor heat exchanger to be equal to or higher than the threshold value of the outdoor heat exchanger temperature and control the intake pressure saturation temperature to be equal to or higher than the threshold value of the intake pressure saturation temperature by increasing the number of revolutions of the outdoor fan.

The operation control unit may control the temperature of the outdoor heat exchanger to be equal to or higher than the threshold value of the outdoor heat exchanger temperature and control the intake pressure saturation temperature to be equal to or higher than the threshold value of the intake pressure saturation temperature by decreasing the number of revolutions of the compressor.

According to a second aspect of the present invention, a control method is a control method of controlling an air conditioning system main unit including: a compressor configured to compress a gas refrigerant; an indoor heat exchanger configured to radiate condensation heat by liquefying the compressed gas refrigerant; an outdoor heat exchanger configured to gasify a liquid refrigerant by absorbing evaporation heat; a pressure sensor configured to detect an intake pressure of a refrigerant to the compressor; and an outdoor heat exchanger temperature sensor configured to detect a temperature of the outdoor heat exchanger, the control method including: calculating an intake pressure saturation temperature from the intake pressure; and determining whether countermeasures for the adherence of frost to the outdoor heat exchanger are required on the basis of the intake pressure saturation temperature and the temperature of the outdoor heat exchanger.

According to a third aspect of the present invention, a program is a program causing a computer which controls an air conditioning system main unit including: a compressor configured to compress a gas refrigerant; an indoor heat exchanger configured to radiate condensation heat by liquefying the compressed gas refrigerant; an outdoor heat exchanger configured to gasify a liquid refrigerant by absorbing evaporation heat; a pressure sensor configured to detect an intake pressure of a refrigerant to the compressor; and an outdoor heat exchanger temperature sensor configured to detect a temperature of the outdoor heat exchanger to calculate an intake pressure saturation temperature from the intake pressure; and determine whether countermeasures for the adherence of frost to the outdoor heat exchanger are required on the basis of the intake pressure saturation temperature and the temperature of the outdoor heat exchanger.

### Effect of the Invention

According to the above-described air conditioning system, control method, and program, the determination accuracy concerning whether countermeasures for the adherence of frost are required can be improved.

### BRIEF DESCRIPTION OF DRAWINGS

Fig. 1 is a schematic constitution diagram of an air conditioning system according to an embodiment of the present invention.
Fig. 2 is a schematic block diagram showing a functional constitution of a control device in the embodiment of the present invention.
Fig. 3 is a graph describing an example of a threshold value determined by a heat exchanger temperature threshold value determination unit in the embodiment of the present invention.
Fig. 4 is a graph describing an example of a threshold value determined by a saturation temperature threshold value determination unit in the embodiment of the present invention.
Fig. 5 is a flowchart describing a processing procedure in which a control device controls an air conditioning system main unit during a heating operation in a defrost operation avoidance mode in the embodiment of the present invention.
Fig. 6 is a flowchart describing an example of a processing procedure in which the control device in the embodiment of the present invention causes the air conditioning system main unit to perform an operation for avoiding a defrosting operation.
Fig. 7 is a schematic constitution diagram illustrating a constitution example of an outdoor heat exchanger in a multi-circuit type outdoor unit in the embodiment of the present invention.

### EMBODIMENTS FOR CARRYING OUT THE INVENTION

Hereinafter, an embodiment of the present invention will be described, but the following embodiment does not limit the invention associated with the claims. Furthermore, not all of the combinations of features described in the embodiments are necessarily essential to the solution means of the invention.

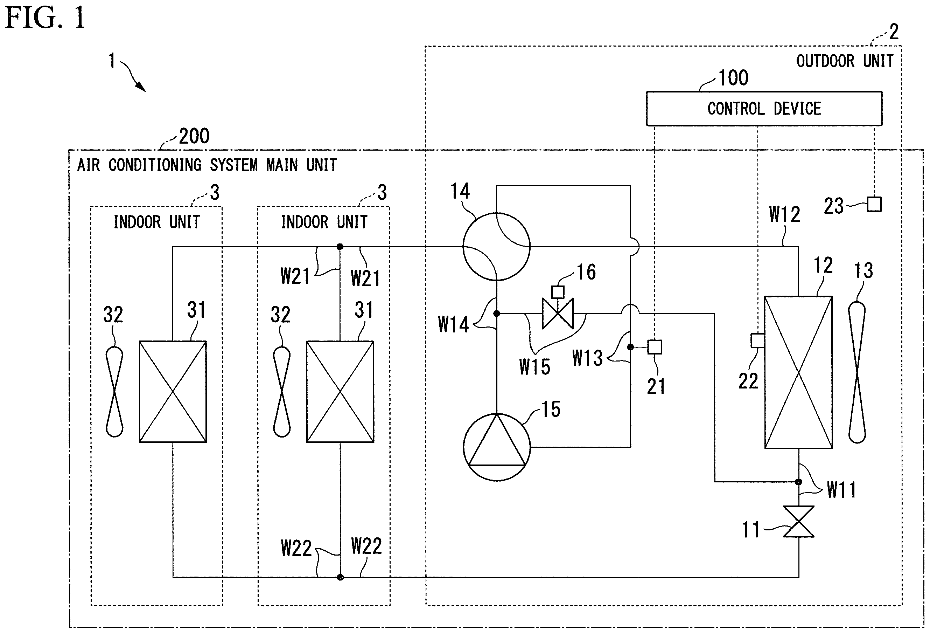

Fig. 1 is a schematic constitution diagram of an air conditioning system according to the embodiment of the present invention. As shown in Fig. 1, an air conditioning system 1 includes an outdoor unit 2 and an indoor unit 3. The outdoor unit 2 includes an expansion valve 11, an outdoor heat exchanger 12, an outdoor fan 13, a four-way valve 14, a compressor 15, a hot gas bypass valve 16, a pressure sensor 21, an outdoor heat exchanger temperature sensor 22, an outside air temperature sensor 23, and a control device 100. The indoor unit 3 includes an indoor heat exchanger 31 and an indoor fan 32.

In the air conditioning system 1, units other than the control device 100 are collectively referred to as an air conditioning system main unit 200. The control device 100 controls the air conditioning system main unit 200.

The expansion valve 11 and the outdoor heat exchanger 12 are connected by a first pipe W11. The outdoor heat exchanger 12 and the four-way valve 14 are connected by a second pipe W12. The four-way valve 14 and the compressor 15 are connected by a third pipe W13 and the pressure sensor 21 is provided in the third pipe W 13. The compressor 15 and the indoor heat exchanger 31 are connected by a fourth pipe W14. The fourth pipe W14 and the first pipe W11 are connected by a fifth pipe W15 and the fifth pipe W15 constitutes a hot gas bypass valve configured to allow some of a refrigerant compressed by the compressor 15 to escape to the first pipe W11. The hot gas bypass valve 16 is provided in the fifth pipe W15. The four-way valve 14 and the indoor heat exchanger 31 are connected by a sixth pipe W21. The indoor heat exchanger 31 and the expansion valve 11 are connected by a seventh pipe W22

The number of indoor heat exchangers 31 included in the air conditioning system 1 is not limited to the two illustrated in Fig. 1 and may be one or more.

The air conditioning system 1 is a system configured to adjust a temperature of the indoor air. In the air conditioning system 1, switching can be performed between a heating operation and a cooling operation. Furthermore, in the air conditioning system 1, switching can be performed between a defrosting operation mode of performing a defrosting operation and a defrost operation avoidance mode of avoiding a defrosting operation during a heating operation.

In the heating operation, a gas refrigerant compressed by the compressor 15 flows into the indoor heat exchanger 31 via the fourth pipe W14, the four-way valve 14 and the sixth pipe W21 in this order. Heat of the gas refrigerant flowing into the indoor heat exchanger 31 is radiated by heat exchange with indoor air and the gas refrigerant condenses. The refrigerant which has become a liquid due to the condensation passes through the seventh pipe W22 and is decompressed by the expansion valve 11 and then flows into the outdoor heat exchanger 12 via the first pipe W11. Heat of the refrigerant flowing into the outdoor heat exchanger 12 is radiated by heat exchange with the outside air and the refrigerant evaporates. The outside air mentioned herein is air from the outside. The refrigerant which has become a gas due to the evaporation passes through the second pipe W12, the four-way valve 14, and the third pipe W13 in this order, flows into the compressor 15, and is compressed.

On the other hand, in the cooling operation, the gas refrigerant compressed by the compressor 15 passes through the fourth pipe W14, the four-way valve 14, and the second pipe W12 in this order and flows into the outdoor heat exchanger 12. Heat of the gas refrigerant flowing into the outdoor heat exchanger 12 is radiated by heat exchange with the outside air and the gas refrigerant condenses. The refrigerant which has become a liquid due to the condensation passes through the first pipe W11 and is decompressed by the expansion valve 11 and then passes through the seventh pipe W22 and flows into the indoor heat exchanger 31. Heat of the refrigerant flowing into the indoor heat exchanger 31 is absorbed by heat exchange with the indoor air and the refrigerant evaporates. The refrigerant which has become a gas due to the evaporation passes through the sixth pipe W21, the four-way valve 14, and the third pipe W13 in this order, flows into the compressor 15, and is compressed.

Also in the defrosting operation, the refrigerant flows in the same manner as in the heating operation and the outdoor heat exchanger 12 is heated by radiating heat in the outdoor heat exchanger 12. The frost adhering to the outdoor heat exchanger 12 is melted by this heating.

The outdoor unit 2 is installed in, for example, a place in which the outdoor unit 2 can exchange heat with the outside air such as an outdoor environment.

The expansion valve 11 decompresses a liquid refrigerant flowing through the expansion valve 11 itself. The refrigerant easily evaporates due to the decompression.

The outdoor heat exchanger 12 performs heat exchange between the refrigerant and the outside air. In the heating operation, a low-pressure liquid refrigerant decompressed by the expansion valve 11 flows into the outdoor heat exchanger 12, heat of the low-pressure liquid refrigerant is absorbed by heat exchange with the outside air, and the low-pressure liquid refrigerant evaporates. Therefore, the outdoor heat exchanger 12 absorbs evaporation heat from the outside air and gasifies the liquid refrigerant. On the other hand, in the cooling operation, a high-pressure gas refrigerant compressed by the compressor 15 flows into the outdoor heat exchanger 12, heat of the high-pressure gas refrigerant is radiated by heat exchange with outside air, and the high-pressure gas refrigerant condenses.

The outdoor fan 13 blows the outside air to the outdoor heat exchanger 12. Heat exchange in the outdoor heat exchanger 12 is promoted due to the blowing of the outdoor fan.

The four-way valve 14 switches among the heating operation, the cooling operation, and a defrosting operation by switching flow paths of the refrigerant. In the heating operation, the four-way valve 14 connects the fourth pipe W14 and the sixth pipe W21 so that the refrigerant from the compressor 15 is caused to flow into the indoor heat exchanger 31. Furthermore, in the heating operation, the four-way valve 14 connects the second pipe W12 and the third pipe W13 so that the refrigerant from the outdoor heat exchanger 12 is caused to flow into the compressor 15. On the other hand, in the cooling operation and the defrosting operation, the four-way valve 14 connects the fourth pipe W14 and the second pipe W12 so that the refrigerant from the compressor 15 is caused to flow into the outdoor heat exchanger 12. Furthermore, in the cooling operation and the defrosting operation, the four-way valve 14 connects the sixth pipe W21 and the third pipe W13 so that the refrigerant from the indoor heat exchanger 31 is caused to flow into the compressor 15.

The compressor 15 compresses the gas refrigerant.

The hot gas bypass valve 16 switches the presence or absence of a flow of the refrigerant from the compressor 15 to the first pipe W11. When the hot gas bypass valve 16 is opened, some of the refrigerant compressed by the compressor 15 flows to the first pipe W11 via the fifth pipe W15. On the other hand, when the hot gas bypass valve 16 is closed, this flow is interrupted.

When the pressure of the refrigerant compressed by the compressor becomes too high in the air conditioning system, a hot gas bypass and a hot gas bypass valve are provided for the purpose of protecting a device or a pipe to decompress the refrigerant in some cases. On the other hand, the air conditioning system 1 according to the embodiment uses the hot gas bypass and the hot gas bypass valve 16 for the purpose of defrosting the outdoor heat exchanger 12 in addition to such a purpose. The fifth pipe W15 corresponds to an example of a hot gas bypass.

The pressure sensor 21 detects an intake pressure of the refrigerant to the compressor 15.

The outdoor heat exchanger temperature sensor 22 detects a temperature of the outdoor heat exchanger 12. For example, the outdoor heat exchanger temperature sensor 22 is provided on an outer surface of the refrigerant pipe of the outdoor heat exchanger 12 and measures a temperature of the outer surface of such a pipe.

The outside air temperature sensor 23 detects the temperature of the outside air.

Any of the expansion valve 11, the four-way valve 14, the compressor 15, the hot gas bypass valve 16, the pressure sensor 21, the outside air temperature sensor 23, and the control device 100 or a plurality of units of these may be provided outside the outdoor unit 2.

The indoor unit 3 is installed in a room serving as a temperature adjustment target.

The indoor heat exchanger 31 performs heat exchange between the refrigerant and the indoor air. In the heating operation, a high-pressure gas refrigerant flows into the indoor heat exchanger 31, heat of the high-pressure gas refrigerant is radiated by heat exchange with indoor air, and the high-pressure gas refrigerant condenses. Therefore, the indoor heat exchanger 31 liquefies the gas refrigerant compressed by the compressor 15 and radiates condensation heat to the indoor air. On the other hand, in the cooling operation, a low-pressure liquid refrigerant flows into the indoor heat exchanger 31, heat of the low-pressure liquid refrigerant is absorbed by heat exchange with the indoor air, and the low-pressure liquid refrigerant evaporates.

The indoor fan 32 blows the air of a room in which the indoor unit 3 is installed to the indoor heat exchanger 31.

Heat exchange in the indoor heat exchanger 31 is promoted due to the blowing of the indoor fan 32.

The control device 100 controls the air conditioning system main unit 200. The control device 100 is configured to include, for example, a computer.

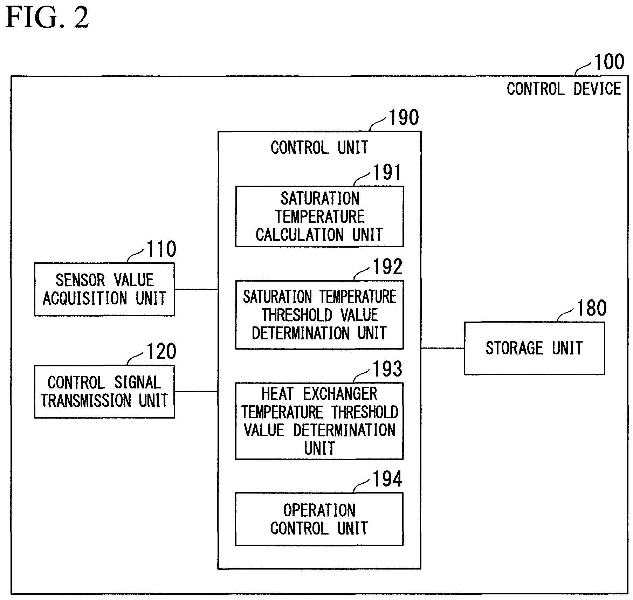

Fig. 2 is a schematic block diagram showing a functional constitution of the control device 100. As shown in Fig. 2, the control device 100 includes a sensor value acquisition unit 110, a control signal transmission unit 120, a storage unit 180, and a control unit 190. The control unit 190 includes a saturation temperature calculation unit (an intake pressure saturation temperature calculation unit) 191, a saturation temperature threshold value determination unit (an intake pressure saturation temperature threshold value determination unit) 192, a heat exchanger temperature threshold value determination unit (an outdoor heat exchanger temperature threshold value determination unit) 193, and an operation control unit 194.

The sensor value acquisition unit 110 acquires sensor values from sensors provided in the air conditioning system main unit 200. Particularly, the sensor value acquisition unit 110 acquires an intake pressure detected by the pressure sensor 21, a temperature of the outdoor heat exchanger 12 detected by the outdoor heat exchanger temperature sensor 22, and a temperature of the outside air detected by the outside air temperature sensor 23.

The control signal transmission unit 120 transmits a control signal generated by the control unit 190 to the air conditioning system main unit 200.

The storage unit 180 is configured using a storage device included in the control device 100 and stores various data.

The control unit 190 controls units of the control device 100. Particularly, the control unit 190 causes the operation control unit 194 to generate a control signal used to control units of the air conditioning system main unit 200. The control unit 190 transmits the generated control signal to the units of the air conditioning system main unit 200 via the control signal transmission unit 120.

The saturation temperature calculation unit 191 calculates an intake pressure saturation temperature from an intake pressure of the compressor 15 detected by the pressure sensor 21. The intake pressure saturation temperature is a saturation temperature of the refrigerant in the compressor determined in accordance with the intake pressure of the compressor.

The intake pressure saturation temperature calculated by the saturation temperature calculation unit 191 approximately indicates an evaporation temperature of the outdoor heat exchanger 12.

The saturation temperature threshold value determination unit 192 determines an intake pressure saturation temperature first threshold value (hereinafter referred to as a "saturation temperature first threshold value" in some cases) and an intake pressure saturation temperature second threshold value (hereinafter referred to as a "saturation temperature second threshold value" in some cases) on the basis of the temperature of the outside air detected by the outside air temperature sensor 23.

The saturation temperature first threshold value corresponds to an example of a threshold value of the intake pressure saturation temperature. Such threshold values will be described below.

The heat exchanger temperature threshold value determination unit 193 determines an outdoor heat exchanger temperature first threshold value (hereinafter referred to as a "heat exchanger first threshold value" in some cases) and an outdoor heat exchanger temperature second threshold value (hereinafter referred to as a "heat exchanger second threshold value" in some cases) on the basis of the temperature of the outside air detected by the outside air temperature sensor 23. The heat exchanger first threshold value corresponds to an example of a threshold value of the outdoor heat exchanger temperature. Such threshold values will be described below.

The operation control unit 194 controls the air conditioning system main unit 200 by generating a control signal used to control the air conditioning system main unit 200. Particularly, the control unit 190 selects either the heating operation or the cooling operation in accordance with a user's operation and performs the selected operation. Furthermore, the control unit 190 selects either the defrosting operation mode or the defrost operation avoidance mode in accordance with a user's operation during the heating operation and performs an operation in the selected mode. In the defrosting operation mode, the operation control unit 194 performs the defrosting operation when frost adheres to the outdoor heat exchanger 12. In the defrost operation avoidance mode, the operation control unit 194 causes the air conditioning system main unit 200 to perform an action determined as an operation for avoiding the defrosting operation to avoid the adherence of frost to the outdoor heat exchanger 12. The operation for avoiding the defrosting operation will be described below.

Also, when the defrost operation avoidance mode is selected, the operation control unit 194 controls the air conditioning system main unit 200 so that a temperature of the outdoor heat exchanger 12 does not fall below the heat exchanger first threshold value and the intake pressure saturation temperature does not fall below the saturation temperature first threshold value during the heating operation.

The operation control unit 194 causes the air conditioning system main unit 200 to perform the operation for avoiding the defrosting operation and increases the temperature of the outdoor heat exchanger 12 and the intake pressure saturation temperature in both a case in which the temperature of the outdoor heat exchanger 12 approaches the heat exchanger first threshold value during an operation in the defrost operation avoidance mode and a case in which the intake pressure saturation temperature approaches the saturation temperature first threshold value.

To be specific, the operation control unit 194 performs one of the following details or a combination of the following details as an operation for avoiding the defrosting operation in both a case in which the temperature of the outdoor heat exchanger 12 is smaller than the heat exchanger second threshold value and a case in which the intake pressure saturation temperature is smaller than the saturation temperature second threshold value.

(1) The hot gas bypass valve 16 is opened.
   A high-temperature refrigerant compressed by the compressor 15 flows into the outdoor heat exchanger 12 when the hot gas bypass valve 16 is opened and the temperature of the outdoor heat exchanger 12 and the intake pressure saturation temperature increase.
(2) The number of revolutions of the outdoor fan 13 is increased.
   Heat exchange in the outdoor heat exchanger 12 is promoted and an amount of evaporation of the refrigerant per unit time is increased by increasing the number of revolutions of the outdoor fan 13. A pressure in the outdoor heat exchanger 12 is increased and the temperature of the outdoor heat exchanger 12 and the intake pressure saturation temperature are increased by increasing the amount of evaporation of the refrigerant per unit time.
(3) The number of revolutions of the compressor 15 is decreased.
   An amount of the refrigerant flowing into the outdoor heat exchanger 12 per unit time is decreased by decreasing the number of revolutions of the compressor 15. Thus, the cooling of the outdoor heat exchanger 12 using the refrigerant is suppressed and the temperature of the outdoor heat exchanger 12 and the intake pressure saturation temperature increase.

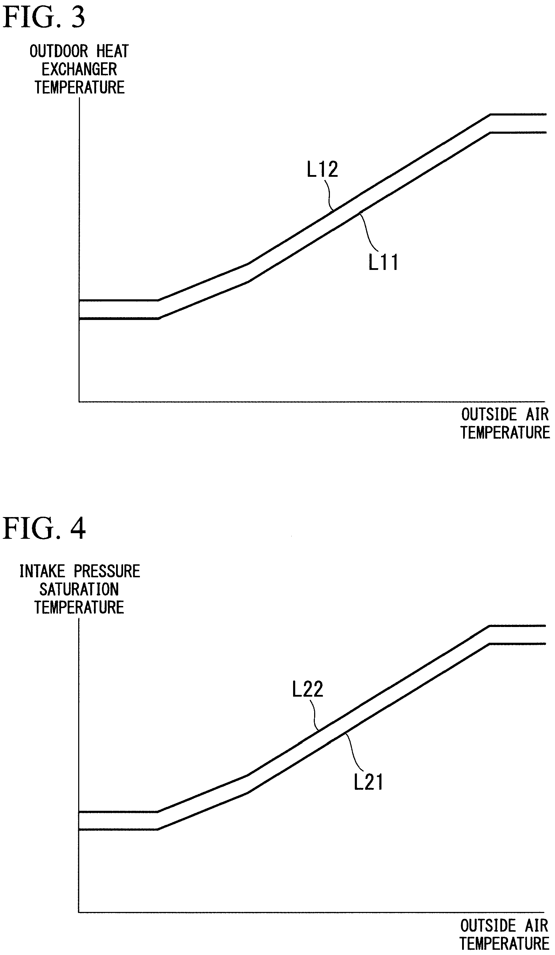

Fig. 3 is a graph describing an example of a threshold value determined by a heat exchanger temperature threshold value determination unit 193.

In Fig. 3, a horizontal axis indicates an outside air temperature and a vertical axis indicates an outdoor heat exchanger temperature. A line L11 indicates a heat exchanger first threshold value. The heat exchanger first threshold value is one criterion for determining whether the defrosting operation is required during an operation in the defrosting operation mode. A line L12 indicates an outdoor heat exchanger second threshold value. The outdoor heat exchanger second threshold value is one criterion for determining whether the operation for avoiding the defrosting operation is required during an operation in the defrost operation avoidance mode.

As shown in Fig. 3, the heat exchanger temperature threshold value determination unit 193 sets the heat exchanger second threshold value to a temperature higher than the heat exchanger first threshold value. This is to set the outdoor heat exchanger temperature be higher than the heat exchanger first threshold value when the operation control unit 194 causes the air conditioning system main unit 200 to perform the operation for avoiding the defrosting operation on the basis of the heat exchanger second threshold value.

Also, as shown in Fig. 3, the heat exchanger temperature threshold value determination unit 193 determines the heat exchanger first threshold value and the heat exchanger second threshold value on the basis of the outside air temperature. When the outside air temperature is low, the outdoor heat exchanger 12 is less likely to be frosted as compared to when the outside air temperature is high. Thus, the heat exchanger temperature threshold value determination unit 193 sets the heat exchanger first threshold value and the heat exchanger second threshold value to be lower than when the outside air temperature is high.

Fig. 3 illustrates a case in which the heat exchanger second threshold value is a predetermined temperature higher than the heat exchanger first threshold value as an example. Examples of the predetermined temperature can include 2 °C. Here, a relationship between the heat exchanger first threshold value and the heat exchanger second threshold value is not limited thereto.

Fig. 4 is a graph describing an example of a threshold value determined by the saturation temperature threshold value determination unit 192.

In Fig. 4, a horizontal axis indicates outside air temperature and a vertical axis indicates an intake pressure saturation temperature. A line L21 indicates a saturation temperature first threshold value. The saturation temperature first threshold value is one criterion for determining whether the defrosting operation is required during an operation in the defrosting operation mode. A line L22 indicates a saturation temperature second threshold value. The saturation temperature second threshold value is one criterion for determining whether the operation for avoiding the defrosting operation is required during an operation in the defrost operation avoidance mode.

As shown in Fig. 4, the saturation temperature threshold value determination unit 192 sets the saturation temperature second threshold value to a temperature higher than the saturation temperature first threshold value. This is to set the intake pressure saturation temperature to be higher than the saturation temperature first threshold value when the operation control unit 194 causes the air conditioning system main unit 200 to perform the operation for avoiding the defrosting operation on the basis of the saturation temperature second threshold value.

Also, as shown in Fig. 4, the saturation temperature threshold value determination unit 192 determines the saturation temperature first threshold value and the saturation temperature second threshold value on the basis of the outside air temperature. When the outside air temperature is low, the outdoor heat exchanger 12 is less likely to be frosted as compared to when the outside air temperature is high. Thus, the heat exchanger temperature threshold value determination unit 193 sets the saturation temperature first threshold value and the saturation temperature second threshold value to be lower than when the outside air temperature is high.

Fig. 4 illustrates a case in which the saturation temperature second threshold value is a predetermined temperature higher than the saturation temperature first threshold value as an example. Examples of the predetermined temperature can include 2 °C. Here, a relationship between the saturation temperature first threshold value and the saturation temperature second threshold value is not limited thereto.

In the defrost operation avoidance mode, the operation control unit 194 causes the air conditioning system main unit 200 to perform the operation for avoiding the defrosting operation in both a case in which the intake pressure saturation temperature falls below the saturation temperature second threshold value and a case in which the temperature of the outdoor heat exchanger 12 falls below the heat exchanger second threshold value.

In the defrosting operation mode, the operation control unit 194 causes the air conditioning system main unit 200 to perform the defrosting operation in both a case in which the intake pressure saturation temperature falls below the saturation temperature first threshold value and a case in which the temperature of the outdoor heat exchanger 12 falls below the heat exchanger first threshold value.

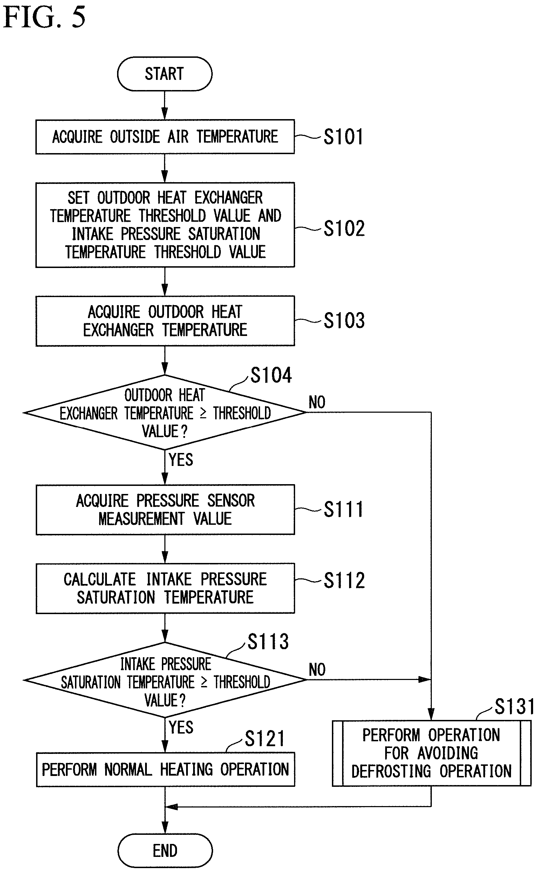

Fig. 5 is a flowchart describing a processing procedure in which the control device 100 controls the air conditioning system main unit 200 during a heating operation in a defrost operation avoidance mode.

In the process of Fig. 5, the sensor value acquisition unit 110 acquires an outside air temperature detected by the outside air temperature sensor 23 (Step S101).

Also, the saturation temperature threshold value determination unit 192 determines a saturation temperature first threshold value and a saturation temperature second threshold value on the basis of the outside air temperature and the heat exchanger temperature threshold value determination unit 193 determines a heat exchanger first threshold value and a heat exchanger second threshold value on the basis of the outside air temperature (Step S102).

Furthermore, the sensor value acquisition unit 110 acquires an outdoor heat exchanger temperature detected by the outdoor heat exchanger temperature sensor 22 (Step S103).

The operation control unit 194 determines whether the outdoor heat exchanger temperature is the heat exchanger second threshold value or more (Step S104). When it is determined that the outdoor heat exchanger temperature is the heat exchanger second threshold value or more (Step S104: YES), the sensor value acquisition unit 110 acquires an intake pressure of the compressor 15 detected by the pressure sensor 21 (Step S111).

Subsequently, the saturation temperature calculation unit 191 calculates an intake pressure saturation temperature on the basis of the intake pressure detected by the pressure sensor 21 (Step S 112).

Moreover, the operation control unit 194 determines whether the intake pressure saturation temperature is an intake pressure saturation temperature second threshold value or more (Step S113). When it is determined that the intake pressure saturation temperature is the saturation temperature second threshold value or more (Step S113: YES), the operation control unit 194 controls the air conditioning system main unit 200 to perform a normal heating operation (Step S121).

After Step S121, the process of Fig. 5 ends.

On the other hand, when it is determined that the outdoor heat exchanger temperature is less than the heat exchanger second threshold value in Step S104 (Step S104: NO), the operation control unit 194 controls the air conditioning system main unit 200 to perform an operation for avoiding a defrosting operation (Step S131).

After Step S 131, the process of Fig. 5 ends.

On the other hand, when it is determined that the intake pressure saturation temperature is less than the saturation temperature second threshold value in Step S 113 (Step S 113: NO), the process transitions to a process of Step S131.

As described above, in Step S104 and Step S113, the operation control unit 194 determines whether countermeasures for the adherence of frost to the outdoor heat exchanger 12 are required on the basis of the intake pressure saturation temperature and a temperature of the outdoor heat exchanger 12.

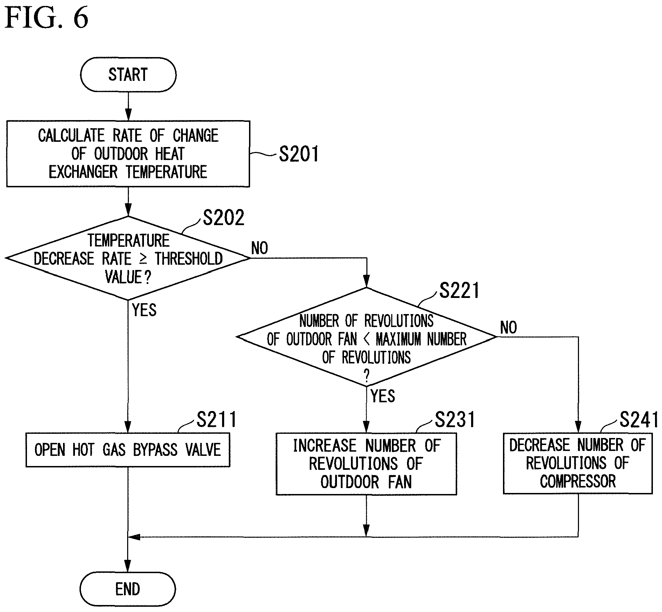

Fig. 6 is a flowchart describing an example of a processing procedure in which the control device 100 causes the air conditioning system main unit 200 to perform an operation for avoiding a defrosting operation.

In a process of Fig. 6, the operation control unit 194 calculates a rate of change per unit time of the outdoor heat exchanger temperature (Step S201).

Moreover, the operation control unit 194 determines whether the rate of change calculated in Step S201 indicates a decrease in temperature and a magnitude of a rate of change (a decrease rate) is a predetermined change rate threshold value (a threshold value of a rate of change of the outdoor heat exchanger temperature) or more (Step S202). When it is determined that the rate of change indicates a decrease in temperature and the magnitude of the rate of change is the change rate threshold value or more (Step S202: YES), the operation control unit 194 opens the hot gas bypass valve 16 (Step S211). Thus, a refrigerant compressed by the compressor 15 flows into the outdoor heat exchanger 12 via the fifth pipe W15 and the outdoor heat exchanger 12 is heated.

After Step S211, the process of Fig. 6 ends.

On the other hand, when it is determined that the rate of change does not indicate the decrease in temperature or the magnitude of the rate of change is less than the change rate threshold value in Step S202 (Step S202: NO), the operation control unit 194 determines whether the number of revolutions of the outdoor fan 13 is less than the maximum number of revolutions (Step S221). The maximum number of revolutions mentioned herein is the maximum number of revolutions determined due to the specification of the outdoor fan 13.

When it is determined that the number of revolutions of the outdoor fan 13 is less than the maximum number of revolutions (Step S221: YES), the operation control unit 194 increases the number of revolutions of the outdoor fan 13 (Step S231). The number of revolutions of the outdoor fan increases so that an amount of evaporation of the refrigerant in the outdoor heat exchanger 12 increases, the pressure rises, and the temperature of the outdoor heat exchanger 12 rises.

After Step S231, the process of Fig. 6 ends.

On the other hand, when it is determined that the number of revolutions of the outdoor fan 13 reaches the maximum number of revolutions in Step S221 (Step S221: NO), the operation control unit 194 decreases the number of revolutions of the compressor 15 (Step S241). Because the number of revolutions of the compressor 15 is decreased, an amount of circulation of the refrigerant decreases and the temperature of the outdoor heat exchanger 12 rises.

After Step S241, the process of Fig. 6 ends.

When the hot gas bypass valve 16 is opened in Step S221, the operation control unit 194 closes the hot gas bypass valve 16 when the next normal heating operation is performed in Step S121 of Fig. 5.

For example, proportion-integral (PI) control can be used as a control method in which the operation control unit 194 increases the number of revolutions of the outdoor fan 13 in Step S221 and a control method in which the operation control unit 194 decreases the number of revolutions of the compressor 15 in Step S241.

For example, when it is determined that an intake pressure saturation temperature is less than a saturation temperature second threshold value, the operation control unit 194 performs PI control to bring the intake pressure saturation temperature close to the saturation temperature second threshold value. As a control gain in this case, a manager of the air conditioning system 1 acquires a control gain in which the intake pressure saturation temperature does not become less than the saturation temperature first threshold value in advance in a test operation or the like and sets the control gain in the control device 100.

Also, when it is determined that the outdoor heat exchanger temperature is less than the heat exchanger second threshold value, the operation control unit 194 performs PI control to bring the outdoor heat exchanger temperature close to the heat exchanger second threshold value. As a control gain in this case, the manager of the air conditioning system 1 acquires a control gain in which the outdoor heat exchanger temperature does not become less than the heat exchanger first threshold value in advance in a test operation or the like and sets the control gain in the control device 100.

Here, the control method in which the operation control unit 194 increases the number of revolutions of the outdoor fan 13 in Step S221 and the control method in which the operation control unit 194 decreases the number of revolutions of the compressor 15 in Step S241 are not limited to PI control. The control method in which the operation control unit 194 increases the number of revolutions of the outdoor fan 13 in Step S221 and the control method in which the operation control unit 194 decreases the number of revolutions of the compressor 15 in Step S241 may be control methods in which the intake pressure saturation temperature does not become less than the saturation temperature first threshold value and the outdoor heat exchanger temperature does not become less than the heat exchanger first threshold value.

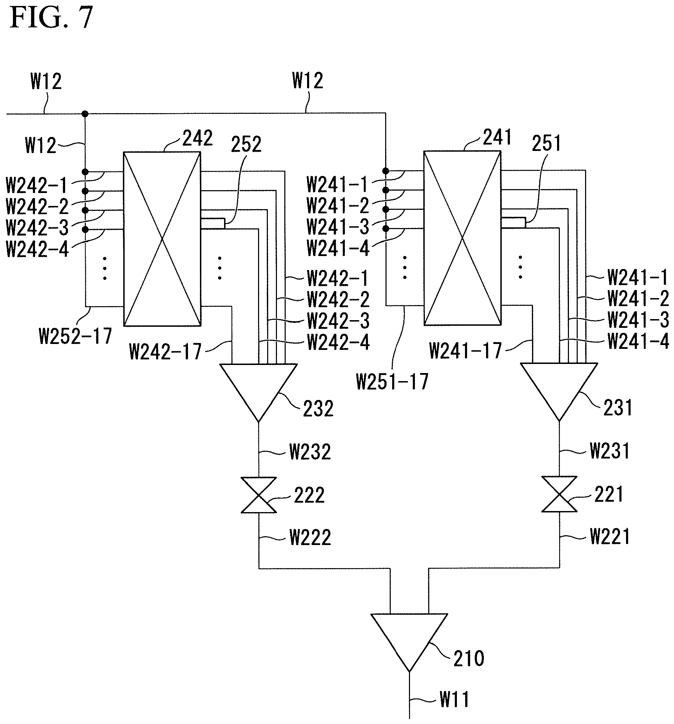

Fig. 7 is a schematic constitution diagram illustrating a constitution example of an outdoor heat exchanger in a multi-circuit type outdoor unit. A case in which the air conditioning system 1 of Fig. 1 includes a heat exchanger system 19 illustrated in Fig. 7 instead of the outdoor heat exchanger 12 and the outdoor heat exchanger temperature sensor 22 will be described below.

As shown in Fig. 7, the heat exchanger system 19 includes a first distributor 210, a first expansion valve 221, a second expansion valve 222, a second distributor 231, a third distributor 232, a first outdoor heat exchanger 241, a second outdoor heat exchanger 242, a first outdoor heat exchanger temperature sensor 251, and a second outdoor heat exchanger temperature sensor 252.

The first pipe W11 is branched into a pipe W221 and a pipe W222 by the first distributor 210. The first distributor 210 and the first expansion valve 221 are connected by the pipe W221. The first distributor 210 and the second expansion valve 222 are connected by the pipe W222. The first expansion valve 221 and the second distributor 231 are connected by a pipe W231. The second expansion valve 222 and the third distributor 232 are connected by a pipe W232.

The pipe W231 is branched into 17 pipes W241-1 to W241-17 by the second distributor 231. The pipe W241-1 reaches the second pipe W12 via the first outdoor heat exchanger 241. Similarly, the pipe W241-2 to the pipe W241-17 also reach the second pipe W12 via the first outdoor heat exchanger 241.

The pipe W232 is branched into 17 pipes W242-1 to W242-17 by the third distributor 232. The pipe W242-1 reaches the second pipe W12 via the second outdoor heat exchanger 242. Similarly, the pipe W242-2 to the pipe W242-17 also reach the second pipe W 12 via the second outdoor heat exchanger 242.

As described above, the 17 circuits are provided in each of the first outdoor heat exchanger 241 and the second outdoor heat exchanger 242. The circuit mentioned herein is a path constituted by a pipe. In the case of the 17 circuits provided in the heat exchanger 241, any one of the pipes W241-1 to W241-17 is included in a first outdoor place. In the case of 17 circuits provided in the heat exchanger 242, any one of the pipes W242-1 to W242-17 is included in a second outdoor place.

In an air conditioning system requiring a large amount of heat such as a building air conditioning system including a plurality of indoor units, an outdoor heat exchanger including a plurality of circuits is used in some cases as described above.

The number of outdoor heat exchangers included in the heat exchanger system 19 is not limited to the two (the first outdoor heat exchanger 241 and the second outdoor heat exchanger 242) illustrated in Fig. 7 and may be one or more. The number of circuits provided in the outdoor heat exchanger is not limited to 17 per outdoor heat exchanger illustrated in Fig. 7 and may be two or more.

As shown in Fig. 7, the first outdoor heat exchanger temperature sensor 251 is provided in the pipe W241-4 as a representative of the pipes W241-1 to W241-17. The second outdoor heat exchanger temperature sensor 252 is provided in the pipe W242-4 as a representative of the pipe W242-1 to W242-17.

Variations occur in temperatures of the pipes depending on the accuracy of a distributor in some cases. For example, when variations occur in an amount of distribution of the refrigerant to the pipes W241-1 to W241-17 depending on the accuracy of the second distributor 231, variations occur in the temperatures of the pipes. Furthermore, the influence of the wind hitting the outdoor heat exchanger also causes variations in the temperatures of the pipes. This applies to both the first outdoor heat exchanger 241 and the second outdoor heat exchanger 242.

For example, it is conceivable to identify a pipe which is likely to have the lowest temperature due to a test operation or the like at the time of developing and attach an outdoor heat exchanger temperature sensor to the identified pipe. In the case of the example of Fig. 7, the outdoor heat exchanger temperature sensor mentioned herein includes the first outdoor heat exchanger temperature sensor 251 and the second outdoor heat exchanger temperature sensor 252.

Here, the temperature of a pipe other than a pipe to which the outdoor heat exchanger temperature sensor is attached is the lowest depending on the individual difference of the distributor and the installation condition of the outdoor unit 2 in some cases. In the case of the example of Fig. 7, the distributor mentioned herein includes the second distributor 231 and the third distributor 232.

It is assumed that the control device 100 does not have a function of avoiding frost adhesion on the basis of the intake pressure saturation temperature. In this case, the control device 100 cannot detect the adherence of frost even when frost adheres to a pipe other than a pipe to which the outdoor heat exchanger temperature sensor is attached, and thus the performance of the air conditioning system 1 is likely to degrade, a heat exchanger is likely to be damaged due to ice, and a refrigerant is likely to leak.

On the other hand, as described with reference to Fig. 6, the operation control unit 194 causes the air conditioning system main unit 200 to perform the operation for avoiding the defrosting operation on the basis of the intake pressure saturation temperature. Thus, the operation control unit 194 is highly likely to cause the air conditioning system main unit 200 to be able to perform the operation for avoiding the defrosting operation even when the temperature of the pipe other than the pipe to which the outdoor heat exchanger temperature sensor is attached decreases. Therefore, a possibility of preventing the performance degradation of the air conditioning system 1, the damage of the heat exchanger due to ice, or the leakage of the refrigerant is highly likely to increase.

Also, in the multi-circuit type outdoor unit, a pressure sensor is provided to detect an intake pressure of a compressor in many cases. Also in the air conditioning system 1, the pressure sensor 21 configured to detect an intake pressure of the compressor 15 can be used for the operation for avoiding the defrosting operation and thus it is unnecessary to use a new pressure sensor for the purpose of determining whether the operation for avoiding the defrosting operation is required.

As described above, the operation control unit 194 determines whether countermeasures for the adherence of frost to the outdoor heat exchanger 12 are required on the basis of the intake pressure saturation temperature and the temperature of the outdoor heat exchanger 12. Thus, the operation control unit 194 can improve the determination accuracy as compared to when it is determined whether countermeasures are required only based on the temperature of the outdoor heat exchanger 12. The countermeasures mentioned herein may be countermeasures to remove frost that adheres to the outdoor heat exchanger 12 like in the defrosting operation and countermeasures to prevent the adherence of frost to the outdoor heat exchanger 12 like in the operation for avoiding the defrosting operation.

Also, the operation control unit 194 controls the air conditioning system main unit 200 to set the temperature of the outdoor heat exchanger 12 to be equal to or higher than the heat exchanger first threshold value and set the intake pressure saturation temperature to be equal to or higher than the saturation temperature first threshold value. Thus, the air conditioning system 1 can prevent the adherence of frost to the outdoor heat exchanger 12 and can avoid the defrosting operation. Thus, the air conditioning system 1 can continue the heating operation while avoiding the interruption of the heating operation due to the defrosting operation.

The operation control unit 194 increases the intake pressure saturation temperature by opening the hot gas bypass valve 16.

Thus, the air conditioning system 1 can increase the temperature of the outdoor heat exchanger 12 and can take countermeasures against frosting to remove or prevent the adherence of frost on the outdoor heat exchanger 12.

Also, the operation control unit 194 increases the number of revolutions of the outdoor fan 13.

Thus, the air conditioning system 1 can increase the temperature of the outdoor heat exchanger 12 and can take countermeasures against frosting to remove or prevent the adherence of frost on the outdoor heat exchanger 12.

The operation control unit 194 increases the intake pressure saturation temperature by decreasing the number of revolutions of the compressor 15.

Thus, the air conditioning system 1 can increase the temperature of the outdoor heat exchanger 12 and can take countermeasures against frosting to remove or prevent the adherence of frost on the outdoor heat exchanger 12.

Processes for units may be performed by recording a program for realizing all or some of the functions of the control device 100 on a computer-readable recording medium, reading such a program recorded on the recording medium in a computer system, and executing the program. The "computer system" mentioned herein includes an operating system (OS) or hardware such as peripheral devices.

Also, the "computer-readable recording medium" refers to a portable medium such as a flexible disk, a magneto-optical disc, a read-only memory (ROM), and a compact disc (CD)-ROM, and a storage device such a hard disk built in a computer system. Furthermore, the above-described program may be a program for realizing some of the above-described functions and may be a program in which the above-described functions can be realized using a combination of the program and a program recorded on a computer system in advance.

Although an embodiment of the present invention has been described in detail above with reference to the drawings, a specific constitution is not limited to the embodiment and design changes or the like not departing from the gist of the invention are also included.

### INDUSTRIAL APPLICABILITY

An embodiment of the present invention relates to an air conditioning system which includes: an air conditioning system main unit including a compressor configured to compress a gas refrigerant, an indoor heat exchanger configured to radiate condensation heat by liquefying the compressed gas refrigerant, an outdoor heat exchanger configured to gasify a liquid refrigerant by absorbing evaporation heat, a pressure sensor configured to detect an intake pressure of a refrigerant to the compressor, and an outdoor heat exchanger temperature sensor configured to detect a temperature of the outdoor heat exchanger; a saturation temperature calculation unit configured to calculate an intake pressure saturation temperature from the intake pressure; and an operation control unit configured to determine whether countermeasures for the adherence of frost to the outdoor heat exchanger are required on the basis of the intake pressure saturation temperature and the temperature of the outdoor heat exchanger.

According to such an embodiment, the determination accuracy concerning whether countermeasures for the adherence of frost are required can be improved.

### Reference Signs List

100 Control device
110 Sensor value acquisition unit
120 Control signal transmission unit
180 Storage unit
190 Control unit
191 Saturation temperature calculation unit
192 Saturation temperature threshold value determination unit
193 Heat exchanger temperature threshold value determination unit
194 Operation control unit

## Claims

1. An air conditioning system, comprising:
an air conditioning system main unit, including
a compressor configured to compress a gas refrigerant,
an indoor heat exchanger configured to radiate condensation heat by liquefying the compressed gas refrigerant,
an outdoor heat exchanger configured to gasify a liquid refrigerant by absorbing evaporation heat,
a pressure sensor configured to detect an intake pressure of a refrigerant to the compressor, and
an outdoor heat exchanger temperature sensor configured to detect a temperature of the outdoor heat exchanger;
a saturation temperature calculation unit configured to calculate an intake pressure saturation temperature from the intake pressure; and
an operation control unit configured to determine whether countermeasures for the adherence of frost to the outdoor heat exchanger are required on the basis of the intake pressure saturation temperature and the temperature of the outdoor heat exchanger.

2. The air conditioning system according to Claim 1, wherein the air conditioning system main unit further includes an outside air temperature sensor configured to detect an outside air temperature,
the air conditioning system further including:
a saturation temperature threshold value determination unit configured to determine a threshold value of the intake pressure saturation temperature on the basis of the outside air temperature; and
a heat exchanger temperature threshold value determination unit configured to determine a threshold value of an outdoor heat exchanger temperature on the basis of the outside air temperature, and
the operation control unit controls the temperature of the outdoor heat exchanger to be equal to or higher than the threshold value of the outdoor heat exchanger temperature and controls the intake pressure saturation temperature to be equal to or higher than the threshold value of the intake pressure saturation temperature.

3. The air conditioning system according to Claim 1 or 2, wherein the air conditioning system main unit further includes a hot gas bypass valve provided in a hot gas bypass configured to bypass a refrigerant compressed by the compressor to the outdoor heat exchanger, and
the operation control unit controls the temperature of the outdoor heat exchanger to be equal to or higher than the threshold value of the outdoor heat exchanger temperature and controls the intake pressure saturation temperature to be equal to or higher than the threshold value of the intake pressure saturation temperature by opening the hot gas bypass valve.

4. The air conditioning system according to any one of Claims 1 to 3, wherein the air conditioning system main unit further includes an outdoor fan configured to blow outside air to the outdoor heat exchanger, and
the operation control unit controls the temperature of the outdoor heat exchanger to be equal to or higher than the threshold value of the outdoor heat exchanger temperature and controls the intake pressure saturation temperature to be equal to or higher than the threshold value of the intake pressure saturation temperature by increasing the number of revolutions of the outdoor fan.

5. The air conditioning system according to any one of Claims 1 to 4, wherein the operation control unit controls the temperature of the outdoor heat exchanger to be equal to or higher than the threshold value of the outdoor heat exchanger temperature and controls the intake pressure saturation temperature to be equal to or higher than the threshold value of the intake pressure saturation temperature by decreasing the number of revolutions of the compressor.

6. A control method of controlling an air conditioning system main unit including a compressor configured to compress a gas refrigerant, an indoor heat exchanger configured to radiate condensation heat by liquefying the compressed gas refrigerant, an outdoor heat exchanger configured to gasify a liquid refrigerant by absorbing evaporation heat, a pressure sensor configured to detect an intake pressure of a refrigerant to the compressor, and an outdoor heat exchanger temperature sensor configured to detect a temperature of the outdoor heat exchanger, the control method comprising:
calculating an intake pressure saturation temperature from the intake pressure; and
determining whether countermeasures for the adherence of frost to the outdoor heat exchanger are required on the basis of the intake pressure saturation temperature and the temperature of the outdoor heat exchanger.

7. A program causing a computer which controls an air conditioning system main unit including a compressor configured to compress a gas refrigerant, an indoor heat exchanger configured to radiate condensation heat by liquefying the compressed gas refrigerant, an outdoor heat exchanger configured to gasify a liquid refrigerant by absorbing evaporation heat, a pressure sensor configured to detect an intake pressure of a refrigerant to the compressor; and an outdoor heat exchanger temperature sensor configured to detect a temperature of the outdoor heat exchanger,
to calculate an intake pressure saturation temperature from the intake pressure; and
to determine whether countermeasures for the adherence of frost to the outdoor heat exchanger are required on the basis of the intake pressure saturation temperature and the temperature of the outdoor heat exchanger.
